**Europäisches Patentamt**

(19) **European Patent Office**

**Office européen des brevets**

(11) Veröffentlichungsnummer: **0 047 832**
**A2**

(12) # EUROPÄISCHE PATENTANMELDUNG

(21) Anmeldenummer: **81105487.3**

(22) Anmeldetag: **14.07.81**

(51) Int. Cl.³: **F 16 B 17/00**

(30) Priorität: **17.09.80 DE 3035043**

(43) Veröffentlichungstag der Anmeldung:
**24.03.82 Patentblatt 82/12**

(84) Benannte Vertragsstaaten:
**AT BE CH FR GB IT LI NL SE**

(71) Anmelder: **artur fischer forschung**
**Weinhalde 14 - 18**
**D-7244 Waldachtal 3 (Tumlingen)(DE)**

(72) Erfinder: **Fischer, Artur, Dr. h.c.**
**Weinhalde 34**
**D-7244 Waldachtal 3/Tumlingen(DE)**

(54) Befestigungselement für Hohlkammerplatten.

(57) Die Erfindung betrifft ein Befestigungselement für aus Ober- und Untergurtplatten sowie Kammern bildenden Stege bestehende Hohlkammerplatten. Das Befestigungselement ist im Bereich der Kammeröffnungen aufweisenden Stirnseiten der Hohlkammerplatten einsetzbar und weist wenigstens zwei gleichgerichtete, in die Kammeröffnungen einschiebbare und über ein Stegteil miteinander verbundene Trägerbalken auf. Zur Fixierung des Befestigungselementes in den Kammern sind die Trägerbalken auf ihrer Tragfläche mit einem in einen Durchbruch der Gurtplatte eingreifenden Rastnocken versehen.

Fig 1

EP 0 047 832 A2

Croydon Printing Company Ltd

EP 1426

## Befestigungselement für Hohlkammer-
## platten

Die Erfindung betrifft ein Befestigungselement für aus Ober- und Untergurtplatten bestehenden Hohlkammerplatten, das im Bereich der die Kammeröffnungen aufweisenden Stirnseiten der Hohlkammerplatten einsetzbar ist.

Derartige, bspw. aus Polykarbonat, Polypropylen oder ähnlichen Kunststoffen bestehende Hohlkammerplatten werden in transparenter Ausführung hauptsächlich für den Bau von Gewächshäusern verwendet. Für die Befestigung von Rohrleitungen und anderen Gegenständen ist es notwendig, im Bereich der die Kammeröffnungen aufweisenden Plattenenden und Stöße Befestigungselemente anbringen zu können. Da einerseits die Gurte und Stege der Hohlkammerplatten sehr dünnwandig sind und andererseits die Kammerhöhe sehr gering ist, sind dübelartige Befestigungselemente, die darüberhinaus auch die gesamte Hohlkammerplatte durchdringen würden, ungeeignet.

Der Erfindung liegt die Aufgabe zugrunde, für Befestigungen im Bereich der die Kammeröffnungen aufweisenden Stirnseiten der Hohlkammerplatten ein geeignetes Befestigungselement zu schaffen.

Erfindungsgemäß wird dies dadurch erreicht, daß das Befestigungselement wenigstens zwei gleichgerichtete, in die Kammeröffnungen einschiebbare und über ein Stegteil miteinander verbundene Trägerbalken aufweist, die auf ihrer Tragfläche mit einem in einen Durchbruch der Gurtplatte eingreifenden Rastnocken versehen sind.

EP 1426

Durch die Anordnung der Rastnocken auf den Trägerbalken ist es möglich, das Befestigungselement verschiebesicher in der Hohlkammerplatte zu fixieren. Für das Einrasten des Rastnokkens ist es notwendig, in die Gurtplatte ein Bohrloch vorzusehen, das von der Stirnseite der Platte einen Abstand aufweist, der dem Abstand des Rastnockens vom Stegteil des Befestigungselementes entspricht. Durch die großflächige Auflage der Trägerbalken an der Innenseite der Gurtplatte können mit dem Befestigungselement hohe Lasten aufgenommen werden. Befestigungen im Bereich der Plattenenden sind insbesondere beim Anbringen von Beschlägen für Türen, Fenstern oder dgl. notwendig.

In einer weiteren Ausgestaltung der Erfindung kann der den Rastnocken tragenden Teil des Trägerbalkens im Querschnitt abgesetzt sein. Diese Gestaltung erleichtert das Einschieben der Trägerbalken in die Kammern der Hohlkammerplatte, da der Rastnocken zurückfedern kann.

In einer weiteren Ergänzung der Erfindung kann beidseitig des Stegteiles jeweils wenigstens zwei Trägerbalken angeordnet sein. Ein derartig gestaltetes Element eignet sich insbesondere für die Stoßverbindung zweier Hohlkammerplatten. Ferner wird bei einer Belastung des Befestigungselementes die Last auf zwei Platten verteilt.

Schließlich kann in einer weiteren Ausgestaltung der Erfindung das Stegteil mit Anschlußmöglichkeiten in Form von Durchbrüchen, Bohrungen und dgl. für die Befestigung von Gegenständen versehen sein. Diese Gestaltung ermöglicht sowohl das Einhängen von

EP 142€

Drähten und Lochbändern für die Abhängung von Rohren als
auch für die Befestigung von Gegenständen mittels Schrauben.

In einer weiteren Ergänzung der Erfindung kann das Stegteil
mit auf den Außenseiten der Hohlkammerplatten aufliegenden
Dichtlippen versehen sein.

Durch die Dichtlippen werden die Kammeröffnungen im Bereich
des Befestigungselementes gegen Eindringen von Staub, Wasser oder dgl. abgedichtet.

In der Zeichnung sind Ausführungsbeispiele der Erfindung
dargestellt.

Es zeigen:

Figur 1    das am Ende einer Hohlkammerplatte eingesetzte Befestigungselement

Figur 2    das Befestigungselement im Bereich des Stoßes
           zweier Hohlkammerplatten, deren Kammern miteinander fluchten.

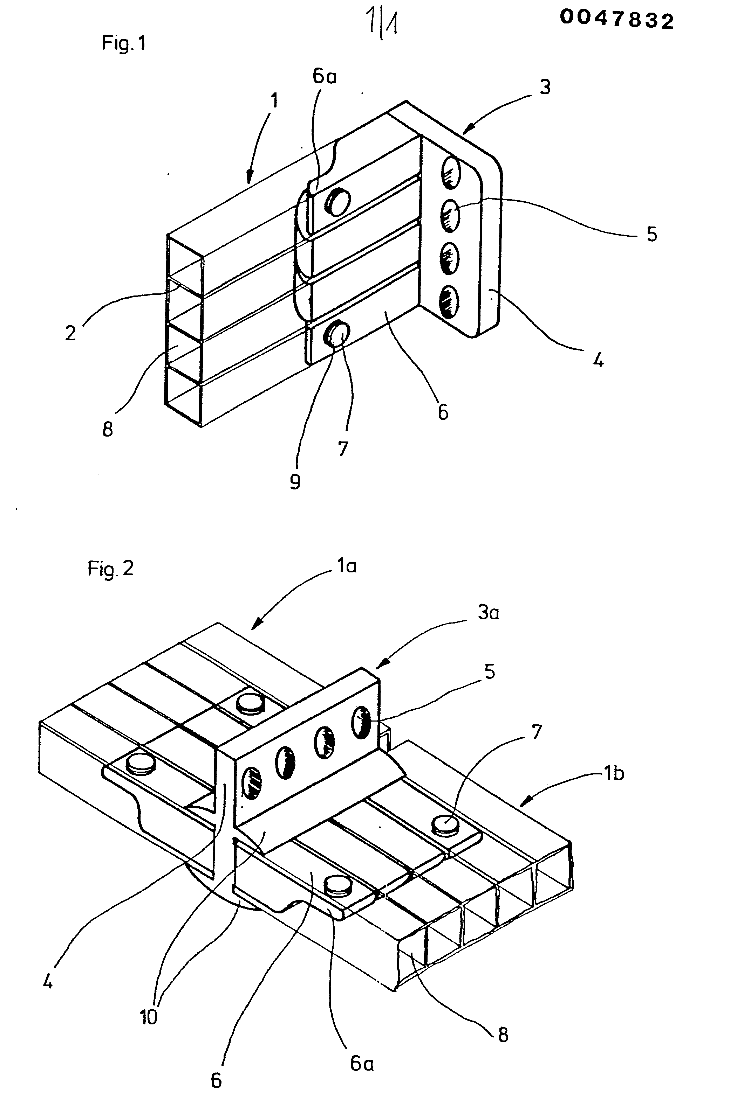

Die bspw. aus Polykarbonat hergestellte Hohlkammerplatte 1
besteht aus einer Ober- und Untergurtplatte, die über längsverlaufende Stege 2 miteinander verbunden sind. Mit derartigen Platten sind freitragende oder durch Unterkonstruktion abgestützte Gewächshäuser herstellbar. Das in Figur 1
dargestellte Befestigungselement 3 kann bspw. zur Anbringung
eines Beschlages für das Einhängen einer Tür verwendet werden. Zu diesem Zweck ist das Stegteil 4 als Lasche ausgebildet,
an der Bohrungen 5 angeordnet sind. Über das Stegteil 4 sind
die parallel zueinander angeordneten Trägerbalken 6 starr mit-

EP 1426

einander verbunden. Der Querschnitt der Trägerbalken 6 entspricht etwa dem Kammerquerschnitt der Hohlkammerplatte 1. Auf der Tragfläche von wenigstens zwei der Trägerbalken sind Rastnocken 7 angeordnet, die beim Einschieben des Befestigungselementes 3 in die Kammern 8 der Hohlkammerplatte 1 in die vorbereiteten Bohrungen 9 der Gurtplatte einrasten. Zum leichteren Einschieben ist der den Rastnocken 7 tragende Teil 6 a des Trägerbalkens 6 im Querschnitt soweit abgesetzt, daß dieser Teil beim Einführen des Trägerbalkens zurückfedern und bei Erreichen der Bohrung 9 einrasten kann.

Bei der Ausführung nach Figur 2 ist das Befestigungselement 3 a im Bereich der Stoßstelle zweier Hohlkammerplatten 1 a, 1 b angeordnet, deren Kammern 8 miteinander fluchten. Durch die in die Kammern 8 der beiden Hohlkammerplatten 1 a, 1 b eingreifenden und über das Stegteil 4 starr miteinander verbundenen Trägerbalken 6 ergibt sich sowohl eine Verbindung der beiden Platten, als auch mittels der im Stegteil 4 vorgesehenen Bohrungen 5 eine Möglichkeit zum Befestigen von Gegenständen. Die an den Trägerbalken 6 angeordneten Rastnocken 7 sorgen für eine zugsichere Verbindung. Zur Abdichtung der Kammeröffnungen im Bereich des Befestigungselementes sind an dem Stegteil 4 Dichtlippen 10 vorgesehen, die auf den Außenflächen der beiden Hohlkammerplatten 1 a, 1 b aufliegen.

**0047832**

— 1 —

artur fischer forschung
7244 Tumlingen/Waldachtal 3

den 15. September 1980
Ju/Woe

- 1 -

EP 1426

P a t e n t a n s p r ü c h e

1. Befestigungselement für aus Ober- und Untergurtplatten sowie Kammern bildenden Stege bestehenden Hohlkammerplatten, das im Bereich der die Kammeröffnungen aufweisenden Stirnseiten der Hohlkammerplatten einsetzbar ist, dadurch gekennzeichnet, daß das Befestigungselement wenigstens zwei gleichgerichtete, in die Kammeröffnungen einschiebbare und über ein Stegteil miteinander verbundene Trägerbalken aufweist, die auf ihrer Tragfläche mit einem in einen Durchbruch der Gurtplatte eingreifenden Rastnocken versehen sind.

2. Befestigungselement nach Anspruch 1, dadurch gekennzeichnet, daß der den Rastnocken tragende Teil des Trägerbalkens im Querschnitt abgesetzt ist.

EP 1426

3. Befestigungselement nach Anspruch 1, dadurch gekennzeichnet, daß beidseitig des Stegteiles jeweils wenigstens zwei Trägerbalken angeordnet sind.

4. Befestigungselement nach Anspruch 1, dadurch gekennzeichnet, daß das Stegteil mit Anschlußmöglichkeiten
   in Form von Durchbrüchen, Bohrungen und dgl. für die
   Befestigung von Gegenständen versehen ist.

5. Befestigungselement nach Anspruch 1, dadurch gekennzeichnet, daß das Stegteil mit auf den Außenseiten der
   Hohlkammerplatten aufliegenden Dichtlippen versehen
   ist.

Fig. 1

Fig. 2